# EUROPÄISCHE PATENTANMELDUNG

(11) **EP 2 565 447 A1**
(43) Veröffentlichungstag der Anmeldung: **06.03.2013**
(21) Anmeldenummer: 12155341.6
(22) Anmeldetag: 14.02.2012
(51) Int. Cl.: F03D 11/00

(54) **Verfahren zur Auslegung, Optimierung oder Zustandsüberwachung einer Windkraftanlage bzw. einer Baugruppe oder eines Konstruktionselements einer Windkraftanlage**

(71) Anmelder: Siemens Aktiengesellschaft, 80333 München (DE)
(72) Erfinder: Ladra, Uwe, 91056 Erlangen (DE); Schäfers, Elmar, Dr., 90763 Fürth (DE); Steinigeweg, Rolf-Jürgen, 91074 Herzogenaurach (DE)

(57) **Zusammenfassung**

Verfahren zur Auslegung, Optimierung oder Zustandsüberwachung einer Windkraftanlage bzw. einer Baugruppe oder eines Konstruktionselements einer Windkraftanlage

Um die Auslegung, Optimierung oder Zustandsüberwachung einer Windkraftanlage bzw. einer Baugruppe oder eines Konstruktionselements einer Windkraftanlage auf besonders effiziente und kostengünstige Weise durchzuführen, wird die Anwendung von Frequenzgangbetrachtungen vorgeschlagen.

## Beschreibung

Die Erfindung betrifft ein Verfahren zur Auslegung, Optimierung, insbesondere Antriebsoptimierung, oder Zustandsüberwachung einer Windkraftanlage bzw. einer Baugruppe oder eines Konstruktionselements einer Windkraftanlage. Darüber hinaus betrifft die Erfindung eine Einrichtung zur Durchführung des Verfahrens sowie ein Computerprogramm.

Windkraftanlagen dienen der Umwandlung kinetischer Energie von Wind mittels eines Rotors in elektrische Energie und werden daher auch Windenergieanlagen genannt. Die Rotorblätter von Windkraftanlagen, die auch als Flügel bezeichnet werden, weisen ein aerodynamisches Profil auf, das einen Druckunterschied hervorruft, aus dem ein auf den Rotor wirkendes Drehmoment resultiert, das die Geschwindigkeit des Rotors beeinflusst.

Die Auslegung und Konstruktion der Rotorblätter erfolgt heute zumeist nach statischen und strömungstechnischen Aspekten. Die Betrachtung von dynamischen Vorgängen und die Berücksichtigung des Antriebes spielt dabei keine Rolle, da nur sehr langsame, quasistatische Bewegungsvorgänge realisiert werden.

Bei Windenergieanlagen besteht die Forderung nach einer möglichst konstanten Leistung des Windrades. Hierzu ist eine möglichst konstante Drehzahl notwendig. Um dies zu erreichen, wird bei Windstärkeänderungen der Pitchwinkel der Rotorblätter entsprechend nachgeführt. Durch eine Verstellung der Anstellwinkel der Rotorblätter werden die Strömungsgeschwindigkeitsunterschiede zwischen Saug- und Druckseite der Rotorblätter verändert. Beispielsweise erfolgt ein Verschwenken des Rotorblattes um einen Pitchwinkel von bis zu 90°, je nach Windstärke, so dass das Rotorblatt bei wenig Wind viel Angriffsfläche und bei viel Wind wenig Angriffsfläche zur Verfügung stellt. Das Nachführen des Pitchwinkels in Abhängigkeit von der Windstärke ist ein relativ langsamer Vorgang, bei dem kaum Schwingungen angeregt werden. Zur Rotorblattverstellung weisen Windkraftanlagen Pitch-Antriebssysteme auf. Die Rotorblattverstellung erfolgt z.B. über hydraulisch betätigte Zylinder oder aber einen Elektro- bzw. Getriebemotor.

Zur Sicherstellung einer optimalen Energiegewinnung sind darüber hinaus aber auch dynamische Bewegungsvorgänge erforderlich. So kommen die umlaufenden Rotorblatter einer Windenergieanlage beim Passieren des Turmes in dessen Windschatten, so dass der gleichbleibende Umlauf der Flügel negativ beeinflusst wird. Um diesen Effekt zu kompensieren, soll jeder Flügel bei der so genannten "Turmschattenkompensation" einmal je Umlauf beim Passieren des Turmes über den Pitchantrieb in Abhängigkeit von der Windgeschwindigkeit und der Aerodynamik des Turms verstellt werden. Eine derartige Verstellung muss hochdynamisch erfolgen. Während das Rotorblatt beim Umlauf den Turmschatten passiert, wird der Pitchwinkel um beispielsweise 0,5° bis 3,0° verstellt und anschließend gleich wieder zurückgeführt. Bei gegenwärtig üblichen Rotorumlaufdrehzahlen von beispielsweise 18 U/min muss dies innerhalb einer Zeitdauer von ca. 100 ms erfolgen. Bei diesen hochdynamischen Vorgängen kann es zur Anregung von Schwingungen des Rotorblattes kommen. Dabei spielt das Schwingungsverhalten des Rotorblattes eine entscheidende Bedeutung. Diese Schwingungen begrenzen die Dynamik des Pitch-Antriebs. Deshalb ist es erforderlich, das Übertragungsverhalten des Antriebs genau zu kennen.

Als Pitch-Antrieb wird beispielsweise ein klassischer Antrieb mit Motor und Getriebe verwendet, wobei die Bewegung über ein Ritzel bzw. einen Zahnkranz auf das Rotorblatt übertragen wird. Die dabei verwendeten Getriebe haben eine sehr große Übersetzung, sind verschleißanfällig, wartungsintensiv und bewirken zusätzliche Nachgiebigkeiten im Antriebsstrang beim Übertragen der Bewegung. Jedoch sind die Rückwirkungen der auf den Motor wirkenden Störkräfte aufgrund der großen Übersetzung so gut wie vernachlässigbar. Somit lässt sich mit der Regelung des Pitch-Antriebs auch kein Einfluss auf solche Störungen und damit verbundene Schwingformen nehmen.

Es wurde bereits vorgeschlagen, zur Pitch-Verstellung getriebelose Direktantriebe zu verwenden. Da solch ein Direktantrieb, z.B. in Form eines Segmentmotors, direkt auf dem Flügel sitzt, spielt das Schwingungsverhalten der direkt angekoppelten Mechanik eine große Rolle. Die auf das Rotorblatt wirkenden Störkräfte und dessen Schwingformen haben somit einen großen Einfluss auf die Dynamik des Pitch-Antriebs. Für eine optimale Reglerauslegung müssen diese Einflussgrößen deshalb mit berücksichtigt werden.

Eine Aufgabe der vorliegenden Erfindung ist es, eine Auslegung, Optimierung, insbesondere Antriebsoptimierung, oder Zustandsüberwachung einer Windkraftanlage bzw. einer Baugruppe oder eines Konstruktionselements einer Windkraftanlage auf besonders effiziente und kostengünstige Weise durchzuführen.

Diese Aufgabe wird durch die in den unabhängigen Patentansprüchen angegebenen Erfindungsgegenstände gelöst. Vorteilhafte Weiterbildungen sind Gegenstand der Unteransprüche sowie der nachfolgenden Beschreibung.

Die im Folgenden im Zusammenhang mit dem Verfahren erläuterten Vorteile und Ausgestaltungen gelten sinngemäß auch für die entsprechenden Vorrichtungen und umgekehrt.

Eine Grundidee der Erfindung ist es, Frequenzgangbetrachtungen bei Windkraftanlagen anzuwenden.

Unter dem Begriff Frequenzgangbetrachtungen werden dabei sowohl Frequenzgangmessungen, als auch Frequenzgangsimulationen verstanden, einschließlich der entsprechenden Frequenzganganalysen. Mit anderen Worten betrifft die Erfindung nicht nur die Anwendung gemessener Frequenzgänge, sondern auch die Anwendung simulierter Frequenzgänge im Zusammengang mit der Lösung von bei Windkraftanlagen auftretenden technischen Problemen. Oft werden zur Lösung dieser Probleme sowohl Frequenzgangmessungen, als auch Frequenzgangsimulationen angewendet.

Dabei ist die Erfindung nicht auf die Anwendung von Frequenzgangbetrachtungen auf die Windflügel einer Windkraftanlage, insbesondere die Frage der Turmschattenkompensation, beschränkt. Vielmehr betrifft die Erfindung allgemein die Anwendung von Frequenzgangbetrachtungen für Windkraftanlagen, einschließlich der Anwendung für die Auslegung, die Optimierung und die Instandhaltung sowohl der gesamten Windkraftanlage, als auch einzelner Komponenten und Baugruppen der Windkraftanlage.

Mit der vorliegenden Erfindung kann sowohl die Auslegung und Optimierung, insbesondere Antriebsoptimierung, als auch die Zustandsüberwachung einer Windkraftanlage bzw. einer Baugruppe oder eines Konstruktionselements einer Windkraftanlage auf besonders effiziente und kostengünstige Weise durchgeführt werden.

Erfindungsgemäß wird ein Verfahren vorgeschlagen, bei dem eine Frequenzgangmessung und/oder Frequenzgangsimulation durchgeführt wird, wobei die Windkraftanlage bzw. die Baugruppe oder das Konstruktionselement der Windkraftanlage mit wenigstens einem definierten Anregungssignal beaufschlagt und wenigstens ein Antwortsignal an einem definierten Messpunkt gemessen wird, bei dem die Ergebnisse der Frequenzgangmessung und/oder Frequenzgangsimulation ausgewertet werden, wobei das wenigstens eine Antwortsignal einer Frequenzanalyse unterzogen wird, und bei dem die Auslegung, Optimierung, insbesondere Antriebsoptimierung, oder Zustandsüberwachung wenigstens teilweise auf der Auswertung der Ergebnisse der Frequenzgangmessung und/oder Frequenzgangsimulation beruht. Im Fall einer Frequenzgangsimulation wird unter der Beaufschlagung mit einem Anregungssignal und der Messung eines entsprechenden Antwortsignals die entsprechende Simulation verstanden. Die Durchführung einer Frequenzgangmessung oder Frequenzgangsimulation bzw. einer Frequenzanalyse im einzelnen ist dem Fachmann bekannt und bedarf daher an dieser Stelle keiner weiteren Erläuterung.

Ein Aspekt der vorliegenden Erfindung ist die besonders effiziente Möglichkeit der Auslegung und Optimierung von Windkraftanlagen. Dies betrifft einerseits den Entwurf neuer Windkraftanlagen (System Engineering und Design), insbesondere die Zusammenstellung geeigneter und optimal aufeinander abgestimmter Baugruppen, als auch die Optimierung bereits bestehender Windkraftanlagen. Insbesondere betrifft dies die Auslegung und Optimierung von Antriebsbaugruppen oder -komponenten. Eine besonders vorteilhafte Anwendung einer solchen Antriebsoptimierung ist die Optimierung eines Antriebsreglers bzw. einer Antriebssteuerung.

Mit Hilfe von Simulationsmodellen, welche die wesentlichen Systemeigenschaften von Windkraftanlagen widerspiegeln, ist es möglich, Windkraftanlagen unter verschiedenen Gesichtspunkten auszulegen und zu optimieren, indem die Simulationsmodelle mit Frequenzgangmessungen abgeglichen werden. Dadurch können auf einfache Art und Weise viele bei der Konstruktion von Windkraftanlagen zu berücksichtigende Teilaspekte, wie Strukturmechanik, Strömungslehre, Antriebstechnik, Aktorik/Sensorik und Informationstechnik, aufeinander abgestimmt und damit optimiert werden. Aspekte bei der Optimierung, die mittels Frequenzganganalyse erfolgt, können die Antriebsregelung unter Berücksichtigung der Strukturmechanik, die Bauteiloptimierung des Flügels, beispielsweise hinsichtlich des strömungsdynamischen Verhalten, das Schwingungsverhalten oder auch Konzeptstudien (z.B. die Anzahl der Flügel betreffend) in Bezug auf maximale Energiegewinnung sein. Somit kann Entwicklung, Konstruktion und Design von Windkraftanlagen anhand von Frequenzgangbetrachtungen unter Berücksichtigung verschiedener Optimierungskriterien erfolgen. Die Auslegung bzw. Optimierung kann dabei sowohl mit Blick auf konstruktive, beispielsweise mechanische, als auch mit Blick auf funktionale, beispielsweise regelungstechnische Merkmale erfolgen. Im Ergebnis können Windenergieanlagen effizienter und bauartspezifisch optimiert betrieben werden, wodurch eine maximale Energiegewinnung sichergestellt wird. Beispielsweise kann eine Antriebsoptimierung für den Pitch-Antrieb erfolgen derart, dass ausgehend von einer bestimmten aerodynamisch vorteilhaften Flügelgestaltung mit Hilfe von Frequenzgangbetrachtungen ein bestimmtes Getriebe ausgewählt wird. Der so geänderte Antriebsstrang kann mit einer angepassten Übersetzung und Drehzahl mit einem darauf abgestimmten Motor zu einem besonders effizienten Pitch-Antrieb ergänzt werden. Eine erfindungsgemäße Antriebsoptimierung kann aber selbstverständlich auch einen anderen Antrieb betreffen, beispielsweise die Hauptantriebsachse der Windkraftanlage.

Ein anderer Aspekt der vorliegenden Erfindung ist die besonders effiziente Möglichkeit von Zustandsüberwachungen von Windkraftanlagen. In diesem Fall kommen in der Regel keine Frequenzgangsimulationen, sondern Frequenzgangmessungen zur Anwendung. So sind beispielsweise bei Windenergieanlagen mit klassischem Antriebskonzept bei der Pitch-Verstellung die Getriebe oft wartungsintensiv und verschleißanfällig, wodurch es oft zu kostspieligen Ausfällen und dem Austausch der Getriebe kommt. Für eine effizientere Vorgehensweise kommt hier erfindungsgemäß eine Zustandsüberwachung ("Condition Monitoring") unter Verwendung von Frequenzgangmessungen zum Einsatz. Dabei werden vorzugsweise bei der Frequenzanalyse festgestellt Frequenzänderungen ermittelt und als Hinweise auf bestehende oder zukünftige Störungen oder Ausfälle bewertet. Damit können Schäden an Windkraftanlagen frühzeitig erkannt bzw. vermieden werden, wodurch sich die Kosten durch Ausfall oder Schäden am System auf ein Minimum reduzieren.

Eine besonders vorteilhafte Anwendung der vorliegenden Erfindung ist die Begrenzung der Schwingungsanfälligkeit der Rotorblatter einer Windkraftanlage bei der Turmschattenkompensation durch konstruktive und/oder steuerungs- bzw. regelungstechnische Maßnahmen. So können beispielsweise die strukturellen Eigenschaften der Rotorblätter derart optimiert werden, dass die Rotorblätter möglichst wenig zu Schwingungen angeregt werden. Auch kann die Steuerung des Pitch-Antriebs derart optimiert werden, dass die Rotorblätter möglichst wenig zu Schwingungen angeregt werden. Im Ergebnis werden unerwünschte Schwingungen der Rotorblätter durch die Pitchverstellung bzw. während der Pitchverstellung minimiert. Eine solche möglichst schwingungsarme Pitchverstellung führt zu einer Verringerung der mechanischen Belastung sowohl der Windflügel, als auch der Windkraftanlage insgesamt.

Sowohl zur Zustandsüberwachung, als auch zur Auslegung bzw. Optimierung von Windkraftanlagen bzw. deren Komponenten und Baugruppen können Frequenzganganalysen einmalig oder mehrfach, auch mit unterschiedlichen Eingangssignalen durchgeführt werden.

Darüber hinaus wird eine Einrichtung mit Mitteln zur Durchführung dieses Verfahrens sowie eine Windkraftanlage mit Mittel zur Durchführung von Frequenzgangmessungen und/oder Frequenzgangsimulationen vorgeschlagen. Die Windkraftanlage weist dabei insbesondere Mittel zum Ansteuern einer Windkraftanlage bzw. einer Baugruppe oder eines Konstruktionselements der Windkraftanlage mit einem definierten Anregungssignal sowie Mittel zum Messen wenigstens eines Antwortsignals an einem definierten Messpunkt auf. Werden Frequenzgangbetrachtungen erfindungsgemäß bei der Turmschattenkompensation angewendet, dann sind diese Mittel vorzugsweise jedem Rotorblatt der Windkraftanlage und/oder jedem einzelnen Pitch-Antrieb zugeordnet.

Zudem schlägt die Erfindung ein Computerprogramm vor. Das Computerprogramm umfasst Computerprogrammanweisungen zum Durchführen aller Schritte eines solchen Verfahrens, wenn das Computerprogramm auf einem Computer oder einer entsprechenden Recheneinheit ausgeführt wird. Der Computer bzw. die Recheneinheit ist zu diesem Zweck zur Durchführung des beschriebenen Verfahrens ausgebildet, insbesondere zur Durchführung aller Schritte entsprechend des beschriebenen Verfahrens, die in einem Zusammenhang mit der Verarbeitung von Daten stehen. Die Recheneinheit weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß des beschriebenen Verfahrens. Bei den Funktionsmodulen kann es sich um Hardwaremodule oder Softwaremodule handeln. Mit anderen Worten kann die Erfindung, soweit es die Recheneinheit betrifft, entweder in Form von Computerhardware oder in Form von Computersoftware oder in einer Kombination aus Hardware und Software verwirklicht werden. Soweit die Erfindung in Form von Software, also als Computerprogramm, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:
- FIG 1: einen gemessenen Frequenzgang eines Antriebssystems,
- FIG 2: einen Frequenzgangvergleich zwischen Simulationsmodell und Messung,
- FIG 3: die Verschiebung von Tilger- und Resonanzfrequenzen,
- FIG 4: eine schematische Darstellung von Teilen einer Windkraftanlage.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

Besonders vorteilhaft ist die Anwendung der vorliegenden Erfindung beispielsweise bei einer dynamischen Einzelblattverstellung. Exemplarisch wird daher zunächst die Anwendung einer Frequenzgangbetrachtung am Beispiel der Optimierung der Antriebsregelung für den Pitch-Antrieb einer Windkraftanlage beschrieben. Dabei wird im Rahmen der Turmschattenkompensation der Pitchwinkel in Abhängigkeit von der Rotorblattumlaufdrehzahl dynamisch angepasst. Der Pitch-Antrieb ist hierzu als dem einzelnen Rotorblatt zugeordneter, getriebeloser Direktantrieb ausgeführt. Die Rotorblattverstellung erfolgt mit anderen Worten über einen getriebelosen Direktantrieb. Das Ergebnis der Optimierung wird in diesem Fall einem Antriebssteuergerät zur Pitchwinkelverstellung zur Verfügung gestellt. Mit Hilfe einer derart optimierten Steuerung können beispielsweise Lagerkräfte konstant gehalten werden, so dass der zu erwartende mechanische Verschleiß minimal ist.

Zur Regleroptimierung des Antriebssystems werden erfindungsgemäß die relevanten Frequenzgänge, wie z.B. Drehzahlregelstrecke oder offener und geschlossener Drehzahl- bzw. Lageregelkreis verwendet. Damit kann die Antriebsreglung optimiert werden, um eine möglichst hohe Dynamik zu erzielen. Zudem können die Rückwirkungen aus der Mechanik mit berücksichtigt werden. Besonders bei Direktantrieben ist das von großer Bedeutung.

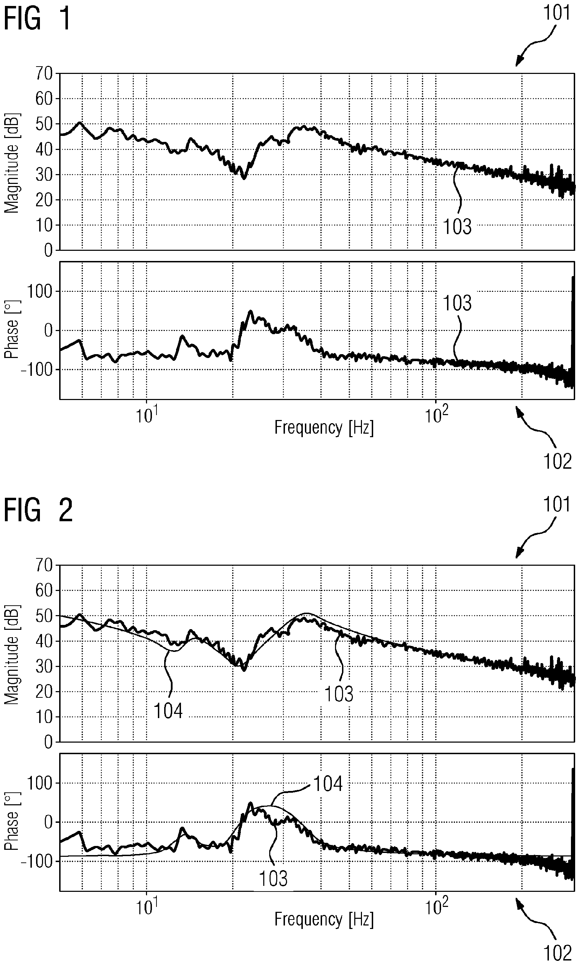

Ein gemessener Frequenzgang zum Übertragungsverhalten der Drehzahlregelstrecke eines Antriebssystems ist in FIG 1 als Bode-Diagramm dargestellt. Dabei stellt der obere Graph 101 die Amplitudenverstärkung (Amplitudenfrequenzgang) und der untere Graph 102 die Phasenverschiebung (Phasenfrequenzgang) der Übertragungsfunktion dar. Obwohl der in FIG 1 dargestellte Frequenzgang nicht dem Frequenzgang eines Pitch-Antriebs entspricht, wird dieser Frequenzgang exemplarisch zur Veranschaulichung dieses Anwendungsbeispiels verwendet.

Zur Durchführung der Frequenzgangmessung wird das Antriebssystem mit wenigstens einem definierten Anregungssignal angesteuert und wenigstens ein diesem Anregungssignal zugeordnetes Antwortsignal an einem definierten Messpunkt gemessen. Anschließend werden die Ergebnisse der Frequenzgangmessung ausgewertet, wobei das wenigstens eine Antwortsignal einer Frequenzanalyse unterzogen wird. Mit anderen Worten werden die Antwortsignal im Frequenzbereich hinsichtlich Amplitude und Phasenverschiebung analysiert. Die sich daran anschließende Optimierung beruht erfindungsgemäß wenigstens teilweise auf der Auswertung der Ergebnisse der Frequenzgangmessung.

Zur Durchführung dieser Optimierung wird ein Simulationsmodell erstellt. Durch dieses Simulationsmodell lassen sich die Eigenschaften des Antriebssystems genau identifizieren. Dabei werden die wichtigsten Parameter des Antriebssystems im Simulationsmodell (z.B. als MKS-Modell) berücksichtigt. Bei den Parametern handelt es sich beispielsweise um Steifigkeiten, Massen bzw. Trägheiten und/oder Übersetzungen sowie die Dämpfung des Systems. Über die Anpassung dieser Parameter wird der simulierte Frequenzgang mit dem gemessenen in Übereinstimmung gebracht, vgl. FIG 2. Somit sind die Parameter des Antriebssystems bekannt, womit das System eindeutig identifiziert ist. Der in FIG 2 dargestellte, gemessene Frequenzgang 103 entspricht dem in FIG 1 abgebildeten Frequenzgang; der simulierte Frequenzgang 104 stimmt in dem dargestellten Beispiel näherungsweise mit dem gemessenen Frequenzgang 103 überein.

Jeder Parameter des Antriebssystems hat einen bestimmten Einfluss auf solch einen Frequenzgang, womit er einen "Fingerabdruck" hinterlässt. Verändern sich bestimmte Parameter, so hinterlässt das Änderungen in der Frequenzgangmessung. Bei einer Änderung bestimmter Frequenzen in der Drehzahlregelstrecke, insbesondere bei einem Verschieben bestimmter Tilger- und Resonanzfrequenzen, können gezielt Schlussfolgerungen auf sich ändernde Parameter des Antriebssystems gezogen werden. Aus diesem Grund wird ein Frequenzgangvergleich zwischen dem Simulationsmodell und der Messung durchgeführt, auf dessen Grundlage die Optimierung erfolgt. Die Optimierung erfolgt numerisch entsprechend definierter Parameter, auf die Einfluss genommen werden kann. Das in der Simulation optimierte System kann anhand dieser Einflussparameter mit den entsprechenden Baugruppen und Komponenten in der Realität angepasst werden.

Exemplarisch wird weiterhin die Anwendung einer Frequenzgangbetrachtung am Beispiel der Zustandsüberwachung ("Condition Monitoring") des Getriebes eines Pitch-Antriebs einer Windkraftanlage beschrieben.

Kommt bei Windenergieanlagen ein klassisches Antriebskonzept zur Anwendung, bei dem für die Pitch-Verstellung Getriebe zum Einsatz kommen, dienen erfindungsgemäß Frequenzgangmessungen zur Zustandsüberwachung. Dabei werden in definierten Abständen auf an sich bekannte Art und Weise Frequenzgangmessungen durchgeführt. Die Zeitabstände können regelmäßig oder variabel sein. Die Abstände können dabei auch so gewählt sein, dass der Zustand kontinuierlich überwacht wird.

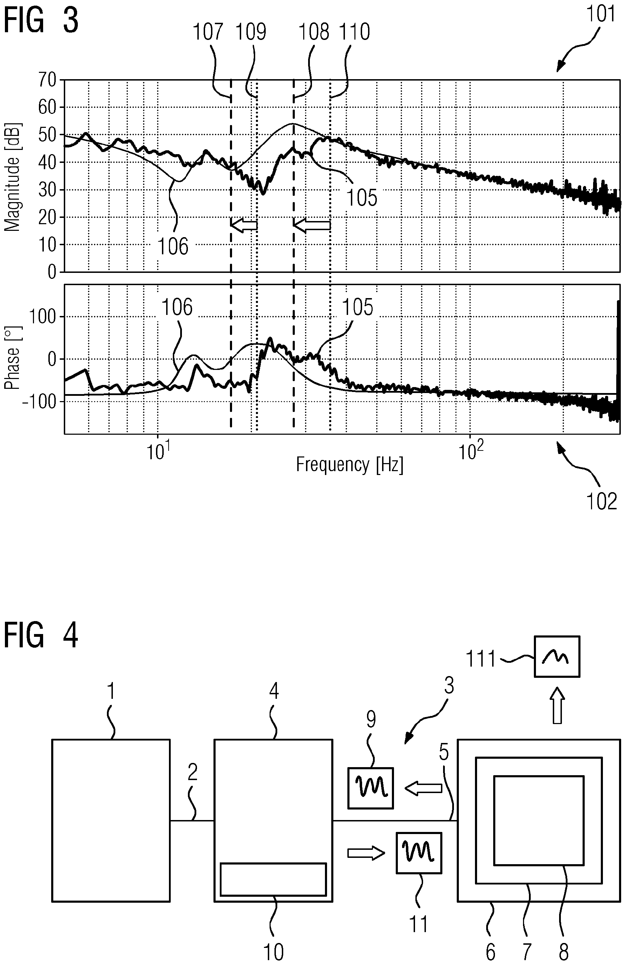

In FIG 3 dargestellt sind ein erster gemessener Frequenzgang 105 und ein zweiter gemessener Frequenzgang 106. Gegenüber dem ersten Frequenzgang 105 sind die Tilgerfrequenz 107 und die Resonanzfrequenz 108 des zweiten Frequenzgangs 106 gegenüber der Tilgerfrequenz 109 und der Resonanzfrequenz 110 des zweiten Frequenzgangs 106 zu niedrigeren Frequenzen hin verschoben. Aufgrund solcher Verschiebungen von Tilger- und Resonanzfrequenzen in den Frequenzgangmessungen lässt sich z.B. der Verschleiß und damit auch frühzeitig der anstehende Ausfall eines Pitch-Getriebes erkennen. Die Auswertung der Messergebnisse kann aber auch durch eine andere Signalanalyse und/oder Mustererkennung erfolgen. In der Regel erfolgt im Zuge der Auswertung ein Vergleich der Messergebnisse mit einem oder mehreren vorgegebenen Referenzwerten und eine anschließende Diagnose. Im Zuge der Zustandsüberwachung wird durch das Auswertemittel ein Zustandsänderungssignal 111 erzeugt, welches an einen Empfänger übertragen wird. Dabei kann es sich beispielsweise um eine Aufforderung zum Tausch eines Getriebeteils handeln, das an eine externe Wartungszentrale übermittelt wird. Im Ergebnis kann die Wartung optimiert werden und auch der rechtzeitige Austausch des Pitch-Getriebes kann erfolgen, bevor durch die Zerstörung des Getriebes größerer Schaden entsteht. Man spricht in diesem Zusammenhang auch von einer "zustandsorientierten Instandhaltung" bzw. einer "vorbeugenden Instandhaltung".

Zumindest die Mittel zur Frequenzgangmessung, vorzugsweise aber auch die Mittel zur Auswertung und Zustandsüberwachung, sind dabei zu dauerhaften Installation an der Windkraftanlage vorgesehen. Die Auswertung und Zustandsüberwachung kann aber auch an einem entfernten Ort, beispielsweise einer Rechenzentrale, erfolgen, wenn die Ergebnisse der Frequenzgangmessung von der Windkraftanlage dorthin übermittelt werden.

Die Anwendung einer Frequenzgangbetrachtung zur Zustandsüberwachung kann beispielsweise auch zur Überwachung des strukturellen Zustandes von Rotorblättern erfolgen. Die Rotorblätter von Windkraftanlagen sind häufig aus Composite-Werkstoffen in Leichtbauweise gefertigt. Aufgrund des Windes und der Rotation sind sie großen strömungsdynamischen Belastungen und damit letztendlich großen Wechselkräften ausgesetzt. Sind diese Belastungen zu groß und erfolgen sie über einen langen Zeitraum, kann es auch zum Bruch der Windflügel kommen. Solch ein Ereignis beginnt meistens mit einem Riss infolge Überbeanspruchung in der Struktur, der sich dann immer weiter ausdehnt. Übersteigen die Beanspruchungen schließlich die zulässigen Festigkeitswerte, so kommt es zum Bruch und schließlich zur Zerstörung des Rotorblattes. Solche Risse in der Struktur verursachen einen Steifigkeitsverlust, der erfindungsgemäß mit Hilfe von Frequenzgangmessungen, hier wiederum erkennbar anhand von Frequenzverschiebungen, detektiert wird.

Für die Pitchverstellung ist jeder Flügel 1 der Windkraftanlage über Verbindungselemente 2 mit einem motorischen Pitch-Antrieb 3 verbunden. Jeder Pitch-Antrieb 3 umfasst einen Motor 4 und ein mit dem Motor 4 über eine Steuerleitung 5 verbundenes Antriebssteuergerät 6, das zur Ansteuerung des Pitch-Antriebs 3 ausgebildet ist. Zu diesem Zweck umfasst jedes Antriebssteuergerät 6 eine Recheneinheit 7. Diese Recheneinheit 7 ist zur Durchführung des beschriebenen Verfahrens ausgebildet. In der Recheneinheit 7 wird ein Computerprogramm 8 mit Computerprogrammanweisungen zum Durchführen aller Schritte des beschriebenen Verfahrens ausgeführt, siehe FIG 4.

Zur Messung des Frequenzgangs wird der Pitch-Antrieb 3 mit Hilfe eines definierten Eingangs- oder Anregungssignals 9 angeregt, beispielsweise mit weißem Rauschen. Die genaue Form des Anregungssignals ist für die Erläuterung des erfinderischen Grundgedankens nur von untergeordneter Bedeutung. Dieses Anregungssignal 9 wird durch das Antriebssteuergerät 6 bereitgestellt, welches für diesen Zweck eingerichtet ist. Mit Hilfe eines Drehzahlsensors 10 wird an einem definierten Messpunkt wenigstens ein Antwortsignal 11 gemessen. Der Drehzahlsensor 10 ist vorteilhafterweise Teil des ohnehin vorhandenen Motormeßsystems des Motors 4. Daher kann auf zusätzliche Sensoren zur Aufnahme von Antwortsignalen vollständig verzichtet werden. Das Antwortsignal 11, das charakteristisch für die Konfiguration und Auslegung des Pitch-Antriebs ist, wird in der Recheneinheit 7 des Antriebssteuergeräts 6 ausgewertet. Auch die Zustandsüberwachung oder Optimierung, die wenigstens teilweise auf der Auswertung der Ergebnisse der Frequenzgangmessung beruht, findet in dieser Recheneinheit 7 statt. Hierzu ist diese entsprechend eingerichtet.

Obwohl die Erfindung im Detail durch das bevorzugte Ausführungsbeispiel näher illustriert und beschrieben wurde, so ist die Erfindung nicht auf die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Auslegung, Optimierung, insbesondere Antriebsoptimierung, oder Zustandsüberwachung einer Windkraftanlage bzw. einer Baugruppe (4) oder eines Konstruktionselements einer Windkraftanlage, **dadurch gekennzeichnet,**
- **dass** eine Frequenzgangmessung und/oder eine Frequenzgangsimulation durchgeführt wird, wobei die Windkraftanlage bzw. die Baugruppe (4) oder das Konstruktionselement der Windkraftanlage mit wenigstens einem definierten Anregungssignal (9) beaufschlagt und wenigstens ein Antwortsignal (11) an einem definierten Messpunkt gemessen wird,
- **dass** die Ergebnisse der Frequenzgangmessung und/oder der Frequenzgangsimulation ausgewertet werden, wobei das wenigstens eine Antwortsignal (11) einer Frequenzanalyse unterzogen wird, und
- **dass** die Auslegung, Optimierung oder Zustandsüberwachung wenigstens teilweise auf der Auswertung der Ergebnisse der Frequenzgangmessung und/oder Frequenzgangsimulation beruht

2. Verfahren nach Anspruch 1, **dadurch gekennzeichnet, dass** zur Zustandüberwachung eine Tilgerfrequenz (107) und/oder eine Resonanzfrequenz (108) überwacht wird und dass bei einer Änderung der Tilgerfrequenz (107) und/oder der Resonanzfrequenz (108) ein Zustandsänderungssignal (111) erzeugt wird.

3. Verfahren nach Anspruch 2, **dadurch gekennzeichnet, dass** es sich bei der zu überwachenden Baugruppe der Windkraftanlage um eine Antriebsbaugruppe handelt oder um einen Teil dieses Antriebs, insbesondere ein Getriebe.

4. Verfahren nach Anspruch 2, **dadurch gekennzeichnet, dass** es sich bei dem zu überwachenden Konstruktionselement der Windkraftanlage um ein Rotorblatt handelt.

5. Verfahren nach Anspruch 1, **dadurch gekennzeichnet, dass** zur Auslegung oder Optimierung ein Simulationsmodell erstellt wird und ein Frequenzgangvergleich zwischen dem Simulationsmodell und der Messung stattfindet, auf dessen Grundlage die Auslegung oder Optimierung erfolgt.

6. Verfahren nach Anspruch 5, **dadurch gekennzeichnet, dass** es sich bei der auszulegenden oder zu optimierenden Baugruppe der Windkraftanlage um eine Antriebsbaugruppe handelt, insbesondere eine Antriebssteuerung oder -regelung.

7. Verfahren nach Anspruch 5, **dadurch gekennzeichnet, dass** es sich bei dem zu optimierenden Konstruktionselement der Windkraftanlage um ein Rotorblatt handelt.

8. Einrichtung zur Auslegung, Optimierung, insbesondere Antriebsoptimierung, oder Zustandsüberwachung einer Windkraftanlage bzw. einer Baugruppe (4) oder eines Konstruktionselements einer Windkraftanlage, **gekennzeichnet durch**
- Mittel (6, 10) zur Durchführung einer Frequenzgangmessung und/oder einer Frequenzgangsimulation, wobei die Windkraftanlage bzw. die Baugruppe (4) oder das Konstruktionselement der Windkraftanlage mit wenigstens einem definierten Anregungssignal (9) beaufschlagt und wenigstens ein Antwortsignal (11) an einem definierten Messpunkt gemessen wird,
- Mittel (7) zur Auswertung der Ergebnisse der Frequenzgangmessung und/oder der Frequenzgangsimulation, wobei das wenigstens eine Antwortsignal (11) einer Frequenzanalyse unterzogen wird, und
- Mittel (7) zur Auslegung, Optimierung oder Zustandsüberwachung, wobei die Auslegung, Optimierung oder Zustandsüberwachung wenigstens teilweise auf der Auswertung der Ergebnisse der Frequenzgangmessung und/oder der Frequenzgangsimulation beruht.

9. Windkraftanlage, **gekennzeichnet durch** Mittel (6,10) zur Durchführung einer Frequenzgangmessung und/oder einer Frequenzgangsimulation, wobei eine Windkraftanlage bzw. eine Baugruppe (4) oder ein Konstruktionselement der Windkraftanlage mit wenigstens einem definierten Anregungssignal (9) beaufschlagt und wenigstens ein Antwortsignal (11) an einem definierten Messpunkt gemessen wird.

10. Computerprogramm (8) zur Auslegung, Optimierung, insbesondere Antriebsoptimierung, oder Zustandsüberwachung einer Windkraftanlage bzw. einer Baugruppe (4) oder eines Konstruktionselements einer Windkraftanlage,
- mit Computerprogrammanweisungen zur Durchführung einer Frequenzgangmessung und/oder einer Frequenzgangsimulation, wobei die Windkraftanlage bzw. die Baugruppe (4) oder das Konstruktionselement der Windkraftanlage mit wenigstens einem definierten Anregungssignal (9) beaufschlagt und wenigstens ein Antwortsignal (11) an einem definierten Messpunkt gemessen wird,
- mit Computerprogrammanweisungen zur Auswertung der Ergebnisse der Frequenzgangmessung und/oder der Frequenzgangsimulation, wobei das wenigstens eine Antwortsignal (11) einer Frequenzanalyse unterzogen wird, und
- mit Computerprogrammanweisungen zur Auslegung, Optimierung und/oder Zustandsüberwachung, wobei die Auslegung, Optimierung oder Zustandsüberwachung wenigstens teilweise auf der Auswertung der Ergebnisse der Frequenzgangmessung und/oder der Frequenzgangsimulation beruht,
wenn das Computerprogramm (8) in einem Computer oder einer entsprechenden Recheneinheit (7) ausgeführt wird.
